# EUROPEAN PATENT SPECIFICATION

(11) **EP 2 841 914 B1**
(45) Date of publication and mention of the grant of the patent: **01.11.2017**
(21) Application number: 13720683.5
(22) Date of filing: 23.04.2013
(51) Int. Cl.: G01M 17/007

(54) **TEST DEVICE SIMULATING MOTOR VEHICLE CRASHES AND METHOD FOR OPERATING A TEST DEVICE**
TESTVORRICHTUNG ZUR SIMULATION VON KRAFTFAHRZEUGZUSAMMENSTÖSSEN UND VERFAHREN ZUM BETRIEB EINER TESTVORRICHTUNG
DISPOSITIF D'ESSAI DE SIMULATION DE COLLISIONS DE VÉHICULES AUTOMOBILES ET PROCÉDÉ DE FONCTIONNEMENT DUDIT DISPOSITIF D'ESSAI

(30) Priority: 24.04.2012 DE 102012206744
(43) Date of publication of application: 04.03.2015
(73) Proprietor: Illinois Tool Works Inc., Glenview, IL 60025 (US)
(72) Inventor: BERAN, Josef, 64380 Roßdorf (DE); PROBST, Thomas, 64823 Groß-Umstadt (DE); DELEEUW, Michael, 64293 Darmstadt (DE)
(74) Representative: Trinks, Ole
(86) International application number: PCT/US2013/037747
(87) International publication number: WO 2013/163147

(56) References cited:
- DE-A1- 2 143 540
- DE-A1- 19 927 944
- US-A1- 2002 026 820

## Description

The invention relates to a test device for simulating motor vehicle crashes and to a method for operating a test device.

In particular, the invention relates to a test device for simulating motor vehicle crashes, with a slide arrangement which is arranged displaceably along a rail arrangement, a test rig which is arranged on the slide arrangement and on which at least one motor vehicle component to be tested is arranged or can be mounted, and with an acceleration unit via which a force is transmittable to the slide arrangement in order to accelerate the latter.

A test device of this type, which is also referred to in the specialist field as a servo-hydraulic or pneumatic catapult system, is generally known in terms of principle from vehicle engineering and serves to cope with the ever shorter development times in automobile manufacturing and the requirements for greater passive safety. With such a test device, inverse crash tests can be carried out. In such tests, the deceleration forces which can occur in normal operation or in the event of a crash do not act on the motor vehicle components to be examined. Instead, in inverse crash tests, the acceleration forces corresponding to the deceleration forces which can occur are introduced into the motor vehicle components to be examined.

The document US 2002/026820 A relates to an acceleration pulse modulation method for HYGE (Hydraulically Controlled, Gas Energized) crash simulation sleds. The acceleration pulse modulation method uses servo-controlled accelerators on moveable parts of the crash simulator components and acceleration measurement instrumentation for comparison of measure acceleration of the sled with a desired acceleration to enable dynamic adjustment of the total accelerating force applied to the sled via servo-controlled accelerators, based upon measured acceleration error in order to eliminate acceleration error.

The document DE 199 27 944 A1 relates to a method for conducting crash tests using a carriage, especially for simulating the collision of a motor vehicle with an obstacle, whereby the deceleration forces of an actual collision are simulated by accelerating a crash-test carriage in accordance with the actual deceleration curve, whereby a force is exerted on the crash-test carriage in the direction of acceleration to avoid calibration tests during the test, said force being greater than the force required for acceleration in accordance with the real deceleration curve. In order to achieve the desired acceleration curve in the crash-test carriage or in a device driving the latter, a brake force is exerted in the direction opposite to the direction of acceleration, said force being so great that the resulting force accelerates the carriage in accordance with the desired acceleration curve.

A further method for conducting crash tests is known from DE 2 143 540 A1.

As a rule, in this context the vehicle components to be examined, such as seats, steering columns and steering wheels, windshields, dashboards, seatbelts and the attachment means thereof, airbag systems and other components, are accelerated in a controlled manner, corresponding to the various accident situations, in a reinforced vehicle body, what is referred to as the tank, on a slide, and the fracture behavior or component reliability is examined. In conventional test devices, the slide is accelerated using, for example, a push rod which is part of an acceleration unit. In particular, it is known to move the push rod hydraulically or pneumatically out of a cylinder tube of a drive cylinder in accordance with a real deceleration curve. In order to be able to simulate the real deceleration curve, it is attempted here to control the hydraulic or pneumatic loading of the push rod by means of a valve.

In order to obtain a real deceleration curve, a very accurate acceleration profile for the loading of the push rod has to be ensured. It is known from the prior art to calculate this acceleration profile on the basis of applied air or fluid pressures. However, it has been shown that the pressure profiles numerically calculated in this respect frequently do not result in reproducible acceleration profiles of the slide arrangement.

On the basis of this problem, it is the object of the invention to develop a test device for simulating motor vehicle crashes of the type mentioned at the beginning and also a method for operating a test device of this type in such a manner that a simulation of accident situations can be improved in a way which is simple to implement, but is nevertheless reproducible. In particular, a test device is intended to be specified, with which, in comparison to conventional test devices, the reproducibility of the tests and the simulation accuracy of the tests can be improved, and the number of necessary iteration steps can be reduced.

With regard to the test device, this object is achieved according to the invention by the subject-matter of independent claim 1.

The test device according to the invention has at least one sensor element for continuously detecting motion measured values of the slide arrangement. This has the advantage that, during the test, the instantaneous acceleration of the slide arrangement can be continuously measured. Accordingly, the simulation accuracy of the tests is greatly improved and the number of necessary iteration steps reduced. Furthermore, reliable test parameters can be determined and ensured by the test device according to the invention.

The test device according to the invention has a regulating device for regulating the acceleration value of the slide arrangement. For this purpose, the regulating device is electrically connected to the at least one sensor element. Accordingly, it is conceivable to store the motion measured values of the slide arrangement, which are detected by the test device according to the invention, not only for documentation purposes but also to use said motion measured values for regulating the acceleration of the slide arrangement. According to this variant of the test unit according to the invention, the motion measured values of the slide arrangement, which are detected continuously by the at least one sensor element, are transmitted to the regulating device. The regulating device uses the associated motion measured values as a regulating variable in order, as an actuating variable, to regulate the acceleration of the slide arrangement.

The regulating device is designed to regulate the force which is transmitted by the acceleration unit to the slide unit with reference to the motion measured values of the slide arrangement. Specifically, the force is regulated by the fact that the regulating device loads the acceleration unit with calculable pressures as the actuating value. In other words, the pressure which prevails at the acceleration unit can be controlled by the regulating device in order therefore to regulate the force, i.e. the acceleration too, which is transmitted by the acceleration unit to the slide unit. Of course, the test device according to the invention is not restricted here to a specific embodiment of the acceleration unit. Rather, the acceleration unit can provide a force for accelerating the slide arrangement by means of all conventional driving mechanisms (pneumatically, hydraulically, electrically, magnetically, etc.).

According to a next use of the test device according to the invention, provision is made for the test device to furthermore have a braking device which is connected to the regulating device and is configured for controlling the acceleration of the slide arrangement. By means of the provision of a braking device, the regulability of the desired acceleration profile can be further improved. As a result, the reproducibility of the desired acceleration profiles is advantageously greatly improved. Furthermore, it is conceivable for the braking device mentioned also to be used to brake the slide arrangement after the latter has passed through the desired acceleration profile. In other words, the regulating device can be used not only to increase the acceleration of the slide arrangement by influencing the acceleration unit, but also to reduce the acceleration of the slide arrangement if required.

In this case, provision is preferably made for the braking device to be designed as an eddy current brake. The test device according to the invention is thereby subject to a particularly small amount of wear, wherein a particularly rapid and precisely determinable braking power is obtained at the same time. Of course, it is also conceivable to configure the braking device as any other electromagnetic or mechanical brake or as a fluid brake.

According to a further alternative embodiment, the at least one sensor element for continuously detecting motion measured values of the slide arrangement has an acceleration sensor and/or a speed sensor and/or a position sensor. In this case, it is preferred in particular to configure the sensor element as an acceleration sensor. For example, it is conceivable in this case to design the acceleration sensor as a strain gauge and/or as a magnet which is moved in the electrical field of a coil. Further examples include the use of lasers, such as laser Doppler technology. If the motion measured value involves the acceleration of the slide arrangement, the regulating variable (motion measured value) can be directly compared with the desired value (sought acceleration profile). If, on the other hand, the motion measured value involves the position or the speed of the slide arrangement, this has to be recalculated beforehand by the regulating device. For example, it is conceivable in this connection for the at least one sensor element to be designed as a speed sensor and for the regulating device to continuously convert the detected speed profile into an acceleration profile of the slide arrangement. Furthermore, the speed profile just mentioned could be used at the same time by the regulating device to calculate absolute position measured values of the slide arrangement in real time. In other words, the regulating device can serve as a virtual sensor element which makes use of the actual measured values of the physical sensor element.

According to the invention, the abovementioned object is also achieved by a method for operating a test device for simulating motor vehicle crashes. In the method according to the invention, first of all a slide arrangement is accelerated with the aid of an acceleration unit, wherein motion measured values of the slide arrangement are recorded continuously with the aid of a sensor element. Said motion measured values are furthermore transmitted continuously to a regulating device, with the aid of which the force which is transmitted by the acceleration unit to the slide unit is regulated with reference to the motion measured values of the slide arrangement. The force which is transmitted by the acceleration unit to the slide arrangement can be regulated, in particular in real time, i.e. as the test proceeds, or else for the next test sequence after the end of the test.

Test parameters which are particularly readily reproducible can also be obtained by the method according to the invention.

According to a further embodiment of the method according to the invention, provision is made for a braking force which is transmitted to the slide arrangement with the aid of a braking device to be controlled with the aid of the regulating device with reference to the motion measured values of the slide arrangement. The acceleration profile, which has already been mentioned above, of the slide arrangement is therefore particularly reliably controlled, as a result of which test conditions which are very readily reproducible can be produced in an advantageous manner.

An exemplary embodiment of the test device according to the invention is described in more detail below with reference to the attached drawing, in which:

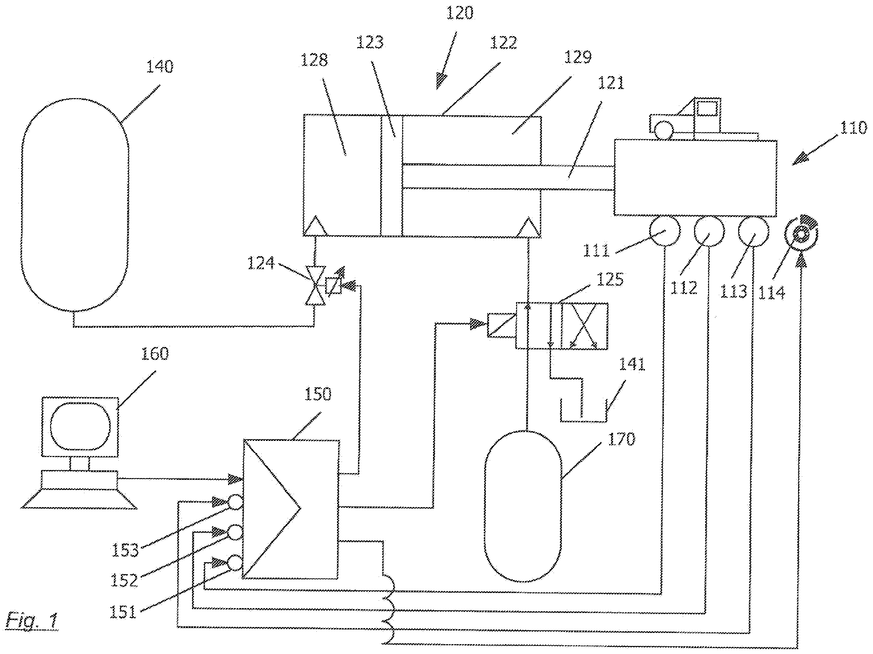

- Fig. 1: shows a signal flowchart of an exemplary embodiment of the invention.

Fig. 1 is a schematic view of a signal flowchart of an exemplary embodiment of the test device 100 according to the invention. As illustrated, the test device 100 has a slide arrangement 110 and an acceleration unit 120. The slide arrangement 110 and the acceleration unit 120 are connected by means of a force transmission device 121. In the embodiment shown, the force transmission device 121 is a push rod or piston rod. A test object, for example a motor vehicle or components thereof, can be arranged on the slide arrangement 110.

The acceleration unit 120 has a hydraulic or pneumatic drive cylinder 122 with a piston 123 and two control valves (first valve 124, second valve 125). The piston 123 together with the piston rod 121 which is connected thereto can be displaced axially along the axis of the drive cylinder 122 and separates two cylinder regions, the piston-side cylinder region 128 and the piston-rod-side cylinder region 129, from each other in a fluid-tight manner.

In particular, in the embodiment of the test device 100 according to the invention that is illustrated in fig. 1, provision is made for the drive cylinder 122 to be embodied as a double-acting cylinder. In this case, that side of the first valve 124 which is not connected to the piston-side region 128 of the drive cylinder 122 is fluidically connected to a first fluid reservoir 140. The first fluid reservoir 140 can be, for example, a piston storage unit. On the other hand, that side of the second valve 125 which is not connected to the piston-rod-side region 129 of the drive cylinder 122 is fluidically connected either to a second unpressurized fluid reservoir 141 or to a high-pressure fluid reservoir 170, depending on the actuating signal.

Accordingly, a highly-pressurized fluid can be supplied via the first valve 124 to the piston-side region 128 of the drive cylinder 122 such that the pressure P1 prevailing in the piston-side region 128 of the drive cylinder 122 can be increased and a pressure force acting on the piston 123 and the piston rod 121 can be transmitted to the slide arrangement 110. The slide arrangement 110 can thereby be accelerated.

In particular, the compressive force acting on the piston rod 121 is determined by the difference between the pressure P1 prevailing in the piston-side region 128 of the drive cylinder 122 and the pressure P2 prevailing in the piston-rod-side region 129 of the drive cylinder 122. In addition, the active area which is present in the piston-side region 128 on the piston 123, and the active area which is present in the piston-rod-side region 129 on the piston 123 influence the compressive force acting on the piston rod 121. On the other hand, the side which is not connected to the piston-rod-side region 129 of the drive cylinder 122 can be brought into fluidic connection with the unpressurized fluid reservoir 141.

As already indicated, fluid can flow into and out of the piston-rod-side region 129 of the drive cylinder 122 via the second valve 125. In this way, the pressure P2 which occurs in the piston-rod-side region 129 and the resulting acceleration can be decisively influenced. In particular, so much pressurized fluid can flow out of the high-pressure reservoir 170 into the piston-rod-side region 129 of the drive cylinder 122 or can flow off into the unpressurized reservoir 141 via the valve 125 that the force exerted on the piston 123 via the pressure difference between the piston-side region 128 and the piston-rod-side region 129 brings about the desired acceleration of the slide arrangement 110 via the force transmission device 121.

However, in order to be able to record the actual acceleration profile of the slide arrangement, the test device according to the invention has at least one sensor element 111, 112, 113. The at least one sensor element can be a position sensor 111 and/or a speed sensor 112 and/or an acceleration sensor 113. Accordingly, the at least one sensor element records, preferably continuously, motion measured values (position, speed or acceleration) of the slide arrangement 110.

According to the preferred embodiment illustrated in fig. 1, the motion measured values determined are transmitted directly to a regulating device 150 for regulating the acceleration of the slide arrangement 110. For this purpose, said regulating device 150 is connected to the at least one sensor element 111, 112, 113. The regulating device is furthermore connected to a control unit 160, such as, for example, to a PC, via a signal-transmitting connection. Via the signal-transmitting connection, a desired variable for the acceleration of the slide arrangement, which desired variable can be defined in advance and can be input, for example, manually into the control unit 160, is transmitted to the regulating device 150 by the control unit 160. The desired variable can be a predetermined acceleration value or else also a predetermined acceleration profile (i.e. a predetermined variation of the acceleration over time).

The regulating device 150 is therefore configured to adjust a regulating variable in accordance with the desired variable. In a preferred embodiment of the test device 100 according to the invention, the regulating variable is the instantaneous motion measured value which is detected by at least one sensor element 111, 112, 113. The motion measured value is either the position, the speed or the acceleration of the slide arrangement 110 depending on the sensor element 111, 112, 113. If the motion measured value is the acceleration of the slide arrangement, said regulating variable can be directly compared with the desired value. If, on the other hand, the motion measured value is the position or the speed of the slide arrangement 110, this has to be recalculated beforehand by the regulating device 150.

The regulating device 150 is furthermore configured to regulate the force which is transmitted by the acceleration unit 120 to the slide unit 110 with reference to the motion measured values of the slide arrangement 110. In other words, from the motion measured value(s) (regulating variable) and the desired value, the regulating device 150 generates an actuating variable which changes the flow rates through the two valves 124, 125 and therefore influences the pressures P1, P2 of the drive cylinder 122 by changing the quantity of fluid which is fed to the piston-side region 128, or is discharged in the rod-side region 129, per unit of time.

In various embodiments of the test device 100, for example proportional (P) regulators, proportional integral (PI) regulators or proportional integral differential (PID) regulators can be used as the regulating device 150.

The test device 100 shown furthermore has a braking device 114 for braking the slide arrangement 110 again during and/or subsequent to the test phase. The braking device 114 is in particular connected to the regulating device 150, as a result of which the regulating device 150 can output a control signal for the braking device 114 as a second actuating variable. In other words, the regulating device 150 can be used not only to increase the acceleration of the slide arrangement 110 by influencing the acceleration unit 120 but also for reducing the acceleration of the slide arrangement 110, if required.

Of course, it is alternatively also possible to configure the connection between the slide arrangement 110 and force transmission unit 121 in such a manner that, after the acceleration phase, the slide arrangement 110 becomes detached from the force transmission unit 121 by the piston 123 and is braked with suitable braking means independently of the piston 123 and of the force transmission unit 121.

The schematically illustrated braking device 114 can advantageously be an eddy current brake. The test device 100 according to the invention thereby has particularly low wear, wherein, at the same time, a very rapid and precisely determinable braking power is obtained. Of course, it is also conceivable to configure the braking device 114 as any other electromagnetic or mechanical brake or else as a fluid brake.

As already mentioned above, the at least one sensor element 111, 112, 113 can be a position sensor 111 and/or a speed sensor 112 and/or an acceleration sensor 113. In this case, it is preferred in particular to configure the at least one sensor element as an acceleration sensor 113. For example, it is conceivable in this case to design the acceleration sensor 113 as a strain gauge and/or as a magnet which is moved in the electrical field of a coil. Further examples include the use of optical measuring technology, such as laser Doppler technology. Of course, the test device according to the invention is not restricted to a certain type of sensor element but may in principle use any measuring principle which is suitable for rapid detection of the motion measured values.

## Claims

1. A test device (100) for simulating motor vehicle crashes, wherein the test device (100) has the following:
- a slide arrangement (110) which is arranged displaceably along a rail arrangement;
- a test rig arranged on the slide arrangement (110), with at least one motor vehicle component to be tested; and
- an acceleration unit (120) configured to transmit a force to the slide arrangement (110) in order to accelerate the slide arrangement (110),
wherein the test device (100) has at least one sensor element (111, 112, 113) configured to detect at least one motion measured value of the slide arrangement (110),
wherein the acceleration unit (120) has a hydraulic or pneumatic drive cylinder (122) with a piston (123), wherein the piston (123) together with a piston rod (121) which is connected thereto is configured to be displaceable axially along the axis of the drive cylinder (122) and to separate a piston-side cylinder region (128) and a piston-rod-side cylinder region (129) from each other in a fluid-tight manner, **characterized in that**:
the hydraulic or pneumatic drive cylinder (122) has a first valve (124) and a second valve (125), said first valve (124) fluidically connecting the piston-side cylinder region (128) to a first fluid reservoir (140) and said second valve (125) fluidically connecting the piston-rod-side cylinder region (129) either to a second unpressurized fluid reservoir (141) or to a high-pressure fluid reservoir (170), and wherein the test device further comprises a regulating device (150) configured to regulate the acceleration of the slide arrangement (110) and to regulate the force which is transmitted by the acceleration unit (120) to the slide unit, said regulating device (150) being connected to the at least one sensor element (111, 112, 113) and further configured to generate from the at least one motion measured value of the slide arrangement (110) and from a predetermined acceleration value or a predetermined acceleration profile, an actuating variable which changes the flow rates through the two valves (124, 125) and to therefore influence the pressures (P1, P2) of the drive cylinder (122) by changing the quantity of fluid which is fed to the piston-side region (128), or is discharged in the rod-side region (129), per unit of time.

2. The test device (100) as claimed in claim 1,
wherein the test device (100) furthermore has a braking device (114) which is connected to the regulating device (150) and is configured for controlling the acceleration of the slide arrangement (110).

3. The test device (100) as claimed in claim 2,
wherein the braking device (114) has an eddy current brake.

4. The test device (100) as claimed in one of the preceding claims,
wherein the at least one sensor element (111, 112, 113) has an acceleration sensor (111) and/or a speed sensor (112) and/or a position sensor (113).

5. A method for operating a test device (100) according to one of the preceding claims,
wherein the method has the following method steps:
- the slide arrangement (110) is accelerated with the aid of the acceleration unit (120);
- at least one motion measured value of the slide arrangement (110) is recorded, preferably continuously, with the aid of the sensor element (111, 112, 113);
- the at least one motion measured value is transmitted, preferably continuously, to the regulating device (150); and
- with the aid of the regulating device (150), the force which is transmitted by the acceleration unit (120) to the slide unit (110) is regulated with reference to the at least one motion measured value of the slide arrangement (110),
**characterized in that**: the regulating device (150) generates from the at least one motion measured value of the slide arrangement (110) and from a predetermined acceleration value or a predetermined acceleration profile an actuating variable which changes the flow rates through the two valves (124, 125) and therefore influences the pressures (P1, P2) of the drive cylinder (122) by changing the quantity of fluid which is fed to the piston-side region (128), or is discharged in the rod-side region (129), per unit of time.

6. The method as claimed in claim 5,
wherein the magnitude of a braking force, which is transmitted to the slide arrangement (110) with the aid of a braking device (114), is controlled with the aid of the regulating device (150) with reference to the at least one motion measured value of the slide arrangement (110).

## Patentansprüche

1. Testvorrichtung (100) zum Simulieren von Kraftfahrzeugzusammenstößen, wobei die Testvorrichtung (100) Folgendes aufweist:
- eine Gleiteinrichtung (110), die auf einer Schieneneinrichtung verschiebbar angeordnet ist;
- einen Prüfstand, der auf der Gleiteinrichtung (110) angeordnet ist, mit mindestens einer zu prüfenden Kraftfahrzeugkomponente; und
- eine Beschleunigungseinheit (120), die konfiguriert ist, um eine Kraft auf die Gleiteinrichtung (110) zu übertragen, um die Gleiteinrichtung (110) zu beschleunigen,
wobei die Testvorrichtung (100) mindestens ein Sensorelement (111, 112, 113) aufweist, das konfiguriert ist, um mindestens einen gemessenen Bewegungswert der Gleiteinrichtung (110) zu erkennen, wobei die Beschleunigungseinheit (120) einen hydraulischen oder pneumatischen Antriebszylinder (122) mit einem Kolben (123) aufweist, wobei der Kolben (123) zusammen mit einer Kolbenstange (121), die an diesem befestigt ist, konfiguriert ist, um in Achsenrichtung entlang der Achse des Antriebszylinders (122) verschiebbar zu sein und um einen kolbenseitigen Zylinderbereich (128) und einen kolbenstangenseitigen Zylinderbereich (129) in einer mediendichten Weise voneinander zu trennen,
**dadurch gekennzeichnet, dass**:
der hydraulische oder pneumatische Antriebszylinder (122) ein erstes Ventil (124) und ein zweites Ventil (125) aufweist, wobei das erste Ventil (124) den kolbenseitigen Zylinderbereich (128) in einer Strömungsverbindung mit einem ersten Fluidtank (140) verbindet und wobei das zweite Ventil (125) den kolbenstangenseitigen Zylinderbereich (129) in einer Strömungsverbindung entweder mit einem zweiten, nicht mit einem Druck beaufschlagten Fluidtank (141) oder einem Hochdruckfluidtank (170) verbindet, und
wobei die Testvorrichtung außerdem umfasst:
eine Regelvorrichtung (150), die konfiguriert ist, um die Beschleunigung der Gleiteinrichtung (110) zu regeln und um die Kraft zu regeln, die durch die Beschleunigungseinheit (120) auf die Gleiteinheit übertragen wird, wobei die Regelvorrichtung (150) mit mindestens einem Sensorelement (111, 112, 113) verbunden ist und außerdem konfiguriert ist, um aus dem mindestens einen gemessenen Bewegungswert der Gleiteinrichtung (110) und aus einem vorbestimmten Beschleunigungswert oder einem vorbestimmten Beschleunigungsprofil eine Betätigungsvariable zu erzeugen, welche die Strömungsraten durch die zwei Ventile (124, 125) ändert, und um dadurch die Drücke (P1, P2) der Antriebszylinder (122) zu beeinflussen, indem die Fluidmenge verändert wird, die pro Zeiteinheit in den kolbenseitigen Bereich (128) eingespeist wird oder aus dem kolbenstangenseitigen Bereich (129) entsorgt wird.

2. Testvorrichtung (100) nach Anspruch 1,
wobei die Testvorrichtung (100) außerdem eine Bremsvorrichtung (114) aufweist, die mit der Regelvorrichtung (150) verbunden ist und konfiguriert ist, um die Beschleunigung der Gleiteinrichtung (110) zu steuern.

3. Testvorrichtung (100) nach Anspruch 2,
wobei die Bremsvorrichtung (114) eine Wirbelstrombremse aufweist.

4. Testvorrichtung (100) nach einem der vorhergehenden Ansprüche,
wobei das mindestens eine Sensorelement (111, 112, 113) einen Beschleunigungssensor (111) und/oder einen Geschwindigkeitssensor (112) und/oder einen Positionssensor (113) aufweist.

5. Verfahren zum Betreiben einer Testvorrichtung (100) nach einem der vorhergehenden Ansprüche,
wobei das Verfahren die folgenden Verfahrensschritte aufweist:
- die Gleiteinrichtung (110) wird mithilfe der Beschleunigungseinheit (120) beschleunigt;
- mindestens ein gemessener Bewegungswert der Gleiteinrichtung (110) wird mithilfe des Sensorelements (111, 112, 113), vorzugsweise kontinuierlich, aufgezeichnet;
- der mindestens eine gemessene Bewegungswert wird, vorzugsweise kontinuierlich, an die Regelvorrichtung (150) übertragen; und
- mithilfe der Regelvorrichtung (150) wird die Kraft, die durch die Beschleunigungseinheit (120) an die Gleiteinheit (110) übertragen wird, in Bezug auf den mindestens einen gemessenen Bewegungswert der Gleiteinrichtung (110) geregelt,
**dadurch gekennzeichnet, dass**:
die Regelvorrichtung (150) aus dem mindestens einen gemessenen Bewegungswert der Gleiteinrichtung (110) und aus einem vorbestimmten Beschleunigungswert oder einem vorbestimmten Beschleunigungsprofil eine Betätigungsvariable erzeugt, welche die Strömungsraten durch die zwei Ventile (124, 125) ändert, und dadurch die Drücke (P1, P2) der Antriebszylinder (122) beeinflusst, indem die Fluidmenge verändert wird, die pro Zeiteinheit in den kolbenseitigen Bereich (128) eingespeist wird oder aus dem kolbenstangenseitigen Bereich (129) entsorgt wird.

6. Verfahren nach Anspruch 5,
wobei die Größe der Bremskraft, die mithilfe einer Bremsvorrichtung (114) an die Gleiteinrichtung (110) übertragen wird, mithilfe der Regelvorrichtung (150) in Bezug auf den mindestens einen gemessenen Bewegungswert der Gleiteinrichtung (110) gesteuert wird.

## Revendications

1. Dispositif d'essai (100) pour simuler des chocs de véhicules automobiles, dans lequel le dispositif d'essai (100) comporte ce qui suit :
- un agencement de chariot (110) qui est disposé de façon à pouvoir se déplacer le long d'un agencement de rail ;
- un banc d'essai disposé sur l'agencement de chariot (110), avec au moins un composant de véhicule automobile à tester ; et
- une unité d'accélération (120) configurée pour transmettre une force à l'agencement de chariot (110) afin de l'accélérer,
dans lequel le dispositif d'essai (100) comporte au moins un élément de capteur (111, 112, 113) configuré pour détecter au moins une valeur mesurée de mouvement de l'agencement de chariot (110),
dans lequel l'unité d'accélération (120) comporte un vérin moteur (122) hydraulique ou pneumatique avec un piston (123),
dans lequel le piston (123) conjointement avec une tige (121) de piston qui lui est raccordée est configuré pour pouvoir de déplacer axialement suivant l'axe du vérin moteur (122) et séparer l'une de l'autre une zone (128) de cylindre côté piston et une zone (129) de cylindre côté tige de piston de manière étanche, **caractérisé en ce que** le vérin moteur (122) hydraulique ou pneumatique comporte un premier clapet (124) et un second clapet (125), ledit premier clapet (124) mettant en communication fluidique la zone (128) de cylindre côté piston à un premier réservoir (140) de fluide et ledit second clapet (125) mettant en communication fluidique la zone (129) de cylindre côté tige de piston soit à un deuxième réservoir (141) de fluide sans pression soit à un réservoir (170) de fluide sous haute pression, et dans lequel le dispositif d'essai comprend en outre un équipement de régulation (150) configuré pour réguler l'accélération de l'agencement de chariot (110) et réguler la force qui est transmise par l'unité d'accélération (120) à l'unité de chariot, ledit équipement de régulation (150) étant raccordé audit élément de capteur (111, 112, 113) et configuré en outre pour générer, à partir de ladite valeur mesurée de mouvement de l'agencement de chariot (110) et d'une valeur prédéterminée d'accélération ou d'un profil prédéterminé d'accélération, une grandeur d'influence qui modifie les débits traversant les deux clapets (124, 125) et par conséquent pour influencer les pressions (P1, P2) du vérin moteur (122) en modifiant la quantité de fluide qui est alimentée vers la zone (128) de cylindre côté piston ou est évacuée de la zone (129) de cylindre côté tige de piston, par unité de temps.

2. Dispositif d'essai (100) selon la revendication 1, dans lequel le dispositif d'essai (100) comporte en outre un dispositif de freinage (114) qui est raccordé à l'équipement de régulation (150) et est configuré pour commander l'accélération de l'agencement de chariot (110).

3. Dispositif d'essai (100) selon la revendication 2, dans lequel le dispositif de freinage (114) comporte un frein à courants de Foucault.

4. Dispositif d'essai (100) selon l'une quelconque des revendications précédentes, dans lequel ledit élément de capteur (111, 112, 113) comporte un capteur d'accélération (111) et/ou un capteur de vitesse (112) et/ou un capteur de position (113).

5. Procédé pour mettre en oeuvre un dispositif d'essai (100) selon l'une quelconque des revendications précédentes, dans lequel le procédé comporte les étapes de procédé ci-après :
- l'agencement de chariot (110) est accéléré à l'aide de l'unité d'accélération (120) ;
- au moins une valeur mesurée de mouvement de l'agencement de chariot (110) est enregistrée, de préférence en continu, à l'aide de l'élément de capteur (111, 112, 113) ;
- ladite valeur mesurée de mouvement est transmise, de préférence en continu, à l'équipement de régulation (150) ; et
- à l'aide de l'équipement de régulation (150), la force qui est transmise par l'unité d'accélération (120) à l'unité de chariot (110) est régulée en se référant à ladite valeur mesurée de mouvement de l'agencement de chariot (110),
**caractérisé en ce que** l'équipement de régulation (150) génère, à partir de ladite valeur mesurée de mouvement de l'agencement de chariot (110) et d'une valeur prédéterminée d'accélération ou d'un profil prédéterminé d'accélération, une grandeur d'influence qui modifie les débits traversant les deux clapets (124, 125) et par conséquent influence les pressions (P1, P2) du vérin moteur (122) en modifiant la quantité de fluide qui est alimentée vers la zone (128) de cylindre côté piston ou est évacuée de la zone (129) de cylindre côté tige de piston, par unité de temps.

6. Procédé selon la revendication 5, dans lequel la grandeur de la force de freinage qui est transmise à l'agencement de chariot (110) à l'aide d'un dispositif de freinage (114) est commandée à l'aide de l'équipement de régulation (150) en se référant à ladite valeur mesurée de mouvement de l'agencement de chariot (110).
